# EUROPEAN PATENT SPECIFICATION

(11) **EP 2 819 323 B1**
(45) Date of publication and mention of the grant of the patent: **07.03.2018**
(21) Application number: 13305917.0
(22) Date of filing: 28.06.2013
(51) Int. Cl.: H04B 10/079, H04B 10/272, H04B 10/29, H04B 10/85

(54) **Detection of alien signal injection in passive optical networks**
Nachweis von Fremdsignaleinspeisung in passiven optischen Netzwerken
Détection d'injection de signal étranger dans des réseaux optiques passifs

(43) Date of publication of application: 31.12.2014
(73) Proprietor: Orange, 75015 Paris (FR)
(72) Inventor: Matyla, Miroslaw, 01-167 Warszawa (PL); Jesionek, Michal, 02-681 Warszawa (PL)
(74) Representative: Orian, Yvette Suzanne

(56) References cited:
- WO-A1-2007/122183
- WO-A2-2007/123692
- US-A1- 2008 095 532
- US-A1- 2012 163 808

## Description

The present invention relates to the field of telecommunications networks and, more particularly, to optical access networks.

One of the most common architectures that is employed for optical access networks is a passive optical network (PON). Various standards have been defined for PONs including, but not limited to, GPON (standardized by the International Telecommunication Union, ITU) and EPON (standardized by the institute of Electrical and Electronics Engineers, IEEE).

Typically, a passive optical distribution network (ODN) has a branching structure with an optical line terminal (OLT) at its root, and a number of optical network units (ONUs) or optical network terminals (ONTs) at the leaves, notably ONTs assigned to end subscribers. It is to be understood that in the rest of the present document the expression ONT (and the plural form ONTs) will be used to cover also optical network units (ONUs), unless the context demands otherwise. In a PON the branching structure is obtained by means of 1-to-N splitter/combiner devices, that is branching devices having a single port on the side towards the OLT and N ports on the side towards the subscriber terminals.

The branching devices used in passive optical networks may be entirely passive. However, active branching devices are sometimes employed to ensure efficient usage of an OLT, notably in situations where an optical access network serves multiple buildings each of which only contains a few subscribers and it is desired to configure the network so that subscribers from the different buildings can be served by a single (or common) line (or service or user) port on the OLT.

Active branching devices not only perform a splitting/combining function but also include optical-electrical-optical converter switch that convert the optical signals arriving at the device from the optical domain to the electrical domain and back again. This makes it possible to perform various functions, such as re-amplifying the signals, synchronization in TDM-PONs, and so on. Active branching devices of this kind are sometimes called virtual optical couplers (VOCs).

Amongst the security issues that arise in passive optical networks there is a specific problem that derives from the fact that the upstream communications channel (i.e. the communications channel in the direction from the ONTs towards the OLT) is shared by multiple subscribers. Because the upstream channel is shared by the ONTs, if a single malicious or malfunctioning ONT emits a signal in the upstream direction, and that signal has a wavelength that interferes with the wavelength usually used for upstream communications (e.g. 1310nm in GPON), then the quality of communications on this part of the optical distribution network will be degraded, perhaps to the point of disrupting communications completely. When an ONT emits this type of interfering signal deliberately this is referred to as a "denial of service attack" (DoS attack).

It is to be understood that, unless the context requires otherwise, in the present document the expression "upstream signal" refers to a signal propagating in the direction from the ONTs towards the OLT and the expression "downstream signal" refers to a signal propagating in the direction from the OLT towards the ONTs.

Existing PONs already monitor the optical communications channels so as to be able to detect signal degradation when it occurs. For example if the bit or frame error rate on the upstream channel exceeds a threshold level then an alarm is generated (e.g. a "signal degraded" alarm). However, even when the signal degradation is detected, in existing optical networks there is no readily available mechanism for determining which branch of the ODN is the source of the problem.

The present invention has been made in view of the above-mentioned disadvantages.

The present invention provides a method of identifying the location of a source of an interfering upstream signal in an optical distribution network comprising an optical line terminal (OLT) connected to a plurality of optical network terminals (ONTs) via a 1-to-N branching device having a first port connected to the OLT and N second ports connected to N respective network branches extending towards the ONTs, the interfering signal propagating in the upstream direction towards the OLT, the method comprising the steps of:
stopping downstream OLT transmissions from being output from the second ports of the branching device,
detecting a second port of the branching device still receiving an upstream signal from the connected network branch despite the absence of downstream OLT transmissions on said network branch, and
identifying the network branch connected to the second port detected in the detecting step as the location of the source of the interfering signal.

The method according to the invention allows the source of an interfering upstream signal on a PON to be localized because, according to the standards currently in place for GPON and other passive optical networks, when the downstream transmissions from an OLT stop being received by ONTs those ONTs are supposed to stop sending signals upstream. The method proposed by the invention enables malfunctioning or misbehaving ONTs, or other signal sources, to be localized because such devices will not follow this standard behaviour when the OLT downstream transmissions are interrupted; instead they will continue upstream transmissions. By detecting this continued transmission of upstream signals on a given network branch, even when the downstream OLT signals are interrupted, the method according to the invention can identify this network branch as the location of the source of an interfering upstream signal.

In various embodiments of the invention the 1-to-N branching device may comprise active optical-electrical-optical (OEO) converters that are configured to convert signals received at the branching device from optical form, to electrical form, and back to optical form. The optical-electrical-optical converters of this kind of branching device can be controlled to implement various steps in different methods embodying the invention. For example, suitable control of the OEO converters enables: downstream OLT transmissions to be prevented from reaching the different network branches connected to the branching device, and misbehaving network branches to be disconnected from the OLT. Moreover, in branching devices having active couplers/converters of this kind, it is possible to make power measurements on the upstream signals received on the individual network branches.

The present invention further provides a 1-to-N optical branching device comprising:
a first port configured for connection to an optical line terminal (OLT),
N second ports configured for outputting first optical signals received from the OLT to N respective network branches and for receiving from the network branches optical signals directed to the OLT,
a first optical converter configured to perform optical-electrical conversion at the first port,
N second optical converters configured to perform optical-electrical conversion at the N second ports, respectively, and
a control unit configured to control at least the second optical converters;
wherein the control unit is configured:
to control the optical converters to stop downstream OLT transmissions from being output from the second ports,
to monitor upstream transmissions received from the network branches, and
to identify, as the location of the source of the interfering signal, a connected network branch still propagating an upstream transmission despite the absence of downstream OLT transmissions.

An optical branching device configured according to the invention can identify the network branch containing the source of an interfering upstream signal in a PON so that suitable remedial action may be taken.

If desired, the control unit of the optical branching device may be configured to control the second optical converters to interrupt downstream OLT transmissions to the respective connected network branches one by one. In this manner, at any given time only a part of the optical network is affected by the process for localizing the source of the interfering upstream signal.

According to various embodiments of the present invention, different action can be taken when the source of the interfering signal has been localized. For example, a notification can be generated identifying the branching device's second port where the interfering signal is present and this notification can be used in any convenient manner (e.g. logged at the branching device or elsewhere, emitted as an alarm either locally or remotely, transmitted to the connected OLT, and so on). As another example, when the source of the interfering signal has been localized suitable countermeasures can be taken. In certain embodiments of the invention a countermeasure is applied whereby the affected network branch is automatically isolated from the OLT (e.g. the branching device breaks the connection between the offending network branch and the OLT).

In some embodiments of the invention, the control unit of the above-mentioned optical branching device comprising OEO converters may be configured to control the second optical converter connected to the second port where the interfering signal is present, to prevent upstream signals received at this port from being transmitted to the OLT.

As mentioned above, branching devices including OEO converters are already being included in some passive optical networks, for example to ensure efficient usage of OLT ports. Embodiments of the invention adapt such branching devices so that they can be used to identify the location of the source of an interfering upstream signal and, if desired, so that appropriate counter measures may be taken. Moreover, the required adaptation may be implemented by suitable configuring of the control logic that is employed in the branching device. Thus, various methods according to the invention can localize the source of an interfering upstream signal (and implement countermeasures if desired), without requiring significant changes to the network.

In certain methods embodying the invention, upstream transmissions on a network branch that has been cut off from the OLT may still be monitored, notably to determine whether the interfering upstream signal ceases. The network branch may be re-connected into the network if it has ceased to carry the interfering signal. These embodiments make it possible to restore service rapidly to a network branch from which the source of the interfering signal has been removed (e.g. a network branch which contains a device that, rather than operating maliciously, had been malfunctioning and has now been repaired).

In some embodiments of the invention, the control unit of the above-mentioned optical branching device comprising OEO converters may be configured to perform such monitoring and to control the second optical converter connected to the second port where the interfering signal is present, to re-connect the network branch to the OLT when the network branch in question has stopped transmitting signals in the upstream direction.

In certain embodiments of the invention the performance of the method of localizing the source of an interfering signal is triggered by a determination that there has been degradation in signals propagating in the PON. For example, the branching device may be configured to monitor signals on the PON to detect when signal degradation occurs and a finding of signal degradation may then lead to performance of a method according to the invention so as to identify a network branch propagating an interfering upstream signal. Alternatively, the branching device may receive a command notification, for example from the connected OLT, notifying it of signal degradation in the network and triggering it to seek the source of an interfering upstream signal by implementing a method according to the invention.

The present invention still further provides an optical line terminal (OLT) of an optical communications network, the OLT comprising:
a connection to one end of an optical fiber, the other end of the optical fiber being branched to plural optical network terminals by a remote branching device,
a receiver unit configured to detect signal degradation in signals received at said connection, and
a transmitter unit configured, responsive to detection of signal degradation by the receiver unit, to transmit to the remote branching device, via said connection, a triggering command adapted to trigger performance of a method as described above of identification of the location of the source of an interfering signal.

According to the existing standards for PONs, OLTs are already equipped with algorithms enabling signal degradation to be detected and this can be exploited by adapting the OLT (e.g. via its associated management system) to respond to detection of signal degradation by transmitting a triggering command or notification to the branching device to trigger a search for the branch of the network containing the misbehaving device.

It is to be understood that the present invention is not limited to application in any one particular type of passive optical network: to the contrary the invention may be applied in PONs according to various industry standards including but not limited to GPON, EPON, GEPON, BPON and APON.

Further features and advantages of embodiments of the present invention will become apparent from the following description of said embodiments, which is given by way of illustration and not limitation, illustrated by the accompanying drawings, in which:
Fig.1 is a diagram illustrating an example of a passive optical network in which certain methods according to the present invention may be implemented;
Fig.2 is a flow diagram representing steps in an example method, embodying the invention, for localizing the source of an interfering signal in a passive optical network;
Fig.3 is a flow diagram representing steps in another example method, embodying the invention, for localizing the source of an interfering signal in a passive optical network; and
Fig.4 illustrates additional steps that may be taken in an extension of methods such as those of Figs.2 and 3.

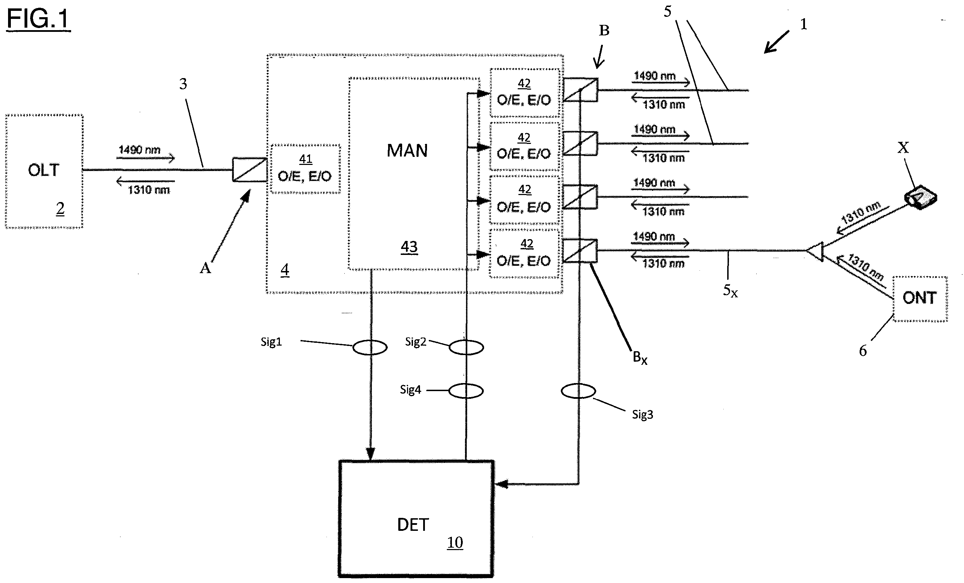

Various methods according to certain embodiments of the invention, and associated devices, will now be described with reference to Figs.1 to 4.

Fig.1 illustrates an example of application of the invention in the context of an FTTH (fiber-to-the-home) PON topology. However, the fact that Fig.1 represents a FTTH topology is purely illustrative; the invention can be applied more generally in substantially any FTTx PON topology to detect which branch in a passive optical network's branching structure is the source of an interfering upstream signal.

The passive optical network 1 illustrated in Fig.1 includes an optical line terminal 2 connected to a number N of optical network terminals 6 via a feeder optical fiber 3, a 1-to-N branching device 4, and N drop fibers 5.The branching device 4 has a first port A on the side towards the OLT and N second ports B on the side towards the ONTs. Which of the ports A and B is considered to be the input or output port of the branching device 4 depends on whether transmission from the OLT to the ONTs is considered or whether transmissions from the ONTs towards the OLT are being considered.

The branching device 4 illustrated in Fig.1 includes first and second active couplers/converters, 41 and 42, having an optical-electrical conversion function and an electrical-optical conversion function. A management system 43 of the branching device 4 applies control logic to ensure appropriate control of the active converters 41 and 42, for example to implement functions such as power supply, control of coupling, and so on.

A typical value of N in a branching device including active converters used nowadays is 2, 4 or sometimes 8. The present invention does not impose any specific limit on the value of the number N, other than that N is 2 or more, but it may be limited by other practical constraints. Fig.1 illustrates the case where N=4.

A downstream signal from the OLT towards the ONTs received at port A of the branching device 4 undergoes optical-electrical conversion at the first active converter 41, any desired processing in the electrical domain, electrical-to-optical conversion at a second active converter 42 and output at a port B of the branching device, along with the necessary splitting to N parallel channels. An upstream signal undergoes the inverse of this processing.

The branching device 4 is configured to exhibit, at its OLT side, behavior similar to that of an ONT, that is, the branching device 4 is configured to have an OMCI channel (ONT Management and Control channel) established with the OLT, to add its own serial number to communications, and may be provisioned in the OLT management system as an ONU/ONT.

In the example illustrated in Fig.1, the OLT transmits signals downstream, that is in the direction towards the ONTs, at a wavelength of 1490 nm, and the ONTs reply with signals in the upstream direction at a wavelength of 1310 nm (as in the GPON standard). It should be mentioned that the present invention is not particularly limited having regard to the specific wavelengths used by the OLT and ONTs, the values represented in Fig.1 correspond to values employed in various PONs in use today.

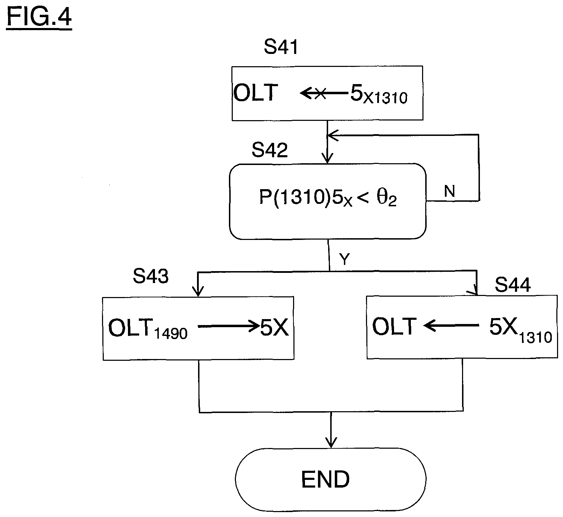

In the example illustrated in Fig.1, a light source X associated with the connection to the illustrated ONT 6 outputs an upstream signal at or in the region of 1310nm and injects the alien (interfering) signal into the network branch 5_{X} via a splitter sp. The upstream signal from source X is received at a port designated B_{X} in Fig.4 and the signal is combined with upstream signals from the other ports B and transferred to port A for onward transmission to the OLT 2. The upstream signal from source X tends to cause degradation of the optical transmissions in the upstream direction. The present invention may be applied even when the upstream signal causing signal degradation is emitted by source X at a wavelength different from the standard wavelength for upstream transmissions and irrespective of whether source X emits a continuous, intermittent or modulated signal.

Fig.1 illustrates a PON 1 in which the branching device 4 is adapted by the addition of a detection unit 10 that is configured to detect interfering upstream signals, notably of the kind involved in DoS attacks on the network. It is to be understood that the detection unit 10 may be implemented in a variety of ways, depending on the application and the designer's objectives. For example, the detection unit 10 may be provided as a dedicated software or hardware module, it may be implemented by adjusting the control logic implemented by the management system 43, and so on.

The detection unit 10 is arranged to receive a signal sig1 indicating that interference in the upstream channel has been detected. Typically, sig1 is generated by the management system 43 of the branching unit when degradation of the upstream signal at 1310nm is detected at the branching device 4 (management system 43 may be configured to monitor signal quality in an ongoing manner). However, sig1 may be generated in response to detection of signal degradation at the OLT, for example when the OLT generates a "signal degraded" alarm or similar notification. In the latter case the OLT may be configured to send the branching device 4 (or the associated detection unit 10) a direct triggering command directing the branching device 4 to implement a method to localize the source of an interfering upstream signal. However, the OLT may be configured to send the branching device 4 (or detection unit 10) an indirect triggering command in the form of a notification that signal degradation has been detected, and in that case the branching device 4 is configured to respond to the received notification by implementing the source-localization method. Furthermore, the triggering command may be sent by a monitoring module associated with the OLT.

The detection unit 10 is configured to output a signal sig2 in response to receipt of the signal sig 1. Signal sig2 controls the second active couplers/converters 42 to switch off the downstream 1490nm signal from the OLT, i.e. to prevent it from reaching the ports B of the branching device. Detection unit 10 is also configured to input measurement signals sig3 indicating the optical power received at each of the ports B of the branching device. Detection unit 10 is also configured to produce a signal sig4 based on its internal processing. Signal sig4 controls a specific one (or, in principle, more than one) second active coupler/converter 42 to prevent a 1310nm signal received from a connected one of the ports B from reaching the port A of the branching device 4.

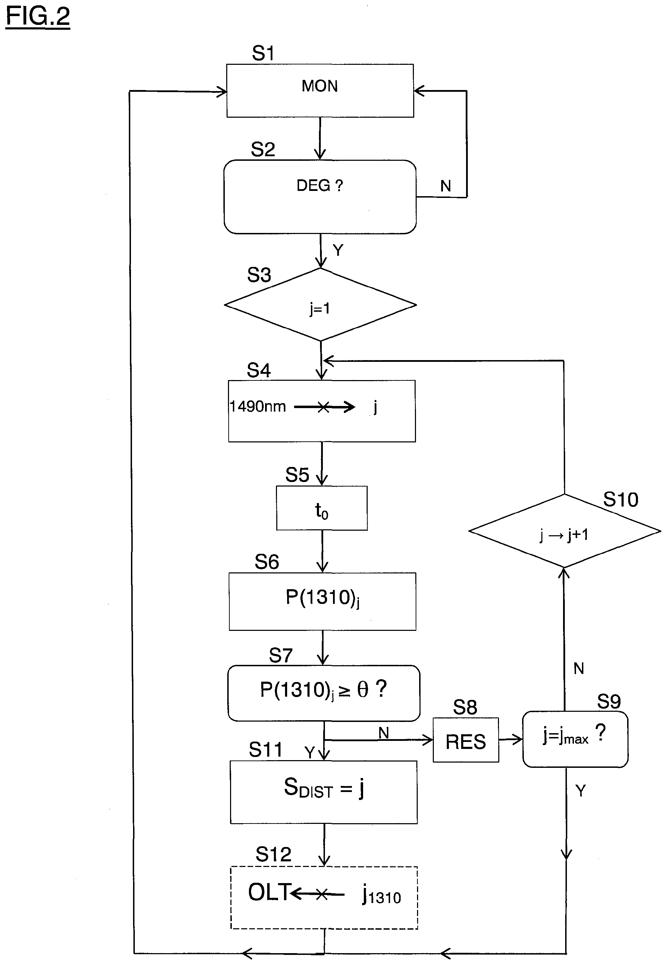

A method embodying the present invention will now be described with reference to the flow chart of Fig.2. The following description is given in the context of implementation of the Fig.2 method using the devices illustrated in Fig.1.

In a first step, S1, of the Fig.2 method, the quality of upstream transmissions in the PON 1 of Fig.1 are monitored. As indicated above, this monitoring may be performed at the branching device 4 or at the OLT 2 or, indeed, in principle at some other location where upstream transmissions in the network 1 can be accessed. During the monitoring, it is verified, in a step S2, whether or not the quality of the upstream signal has degraded to a particular extent. For example, it may be checked whether the bit error rate, frame error rate or the like in an upstream channel has exceeded a threshold that corresponds to a specific absolute or relative degree of signal degradation. If the signal quality is still sufficiently good the flow returns to the monitoring of step S1. On the other hand, if a determined degree of signal degradation has been detected in step S2 then a method is triggered for seeking the network branch that contains the source of an interfering upstream signal (the presumed cause of the signal degradation). In the present example, the detection of signal degradation in step S2 results in production of a triggering signal sig1 that is supplied to the detection unit 10 of Fig.1. The detection unit 10 manages performance of the source-localization method according to the present embodiment of the invention.

In the specific example illustrated in Fig.2, the detection unit 10 emits control signals sig2 to the second optical converters 42 of the branching device 4 one by one, so that the downstream 1460nm signal from the OLT is temporarily cut off from each of the ports B of the branching device. As illustrated in Fig.2, the detection unit selects a first one (j=1) of the second optical converters 42 in a step S3, then outputs a control signal sig2 to the selected optical converter so that it prevents the 1490nm downstream signal from reaching the associated port B (step S4 in Fig.2). At a step S5 of the Fig.2 method, a timer (not shown) times a predetermined time period t₀ between the time when the 1490nm downstream signal is interrupted on the selected network branch and a measurement time.

If the duration of the interval t₀ is set very short then well-behaved ONTs may not have time to power down their lasers and cease upstream transmissions before measurement is made, leading to a false finding that a network branch containing the relevant ONT is the source of an interfering signal. On the other hand, if the time interval t₀ is set long then subscribers using the network may be inconvenienced by the interruption of their connection in step S4 of the method. An implementation of the invention using a time interval t₀ of 50 ms duration gives good results, but the invention is not limited to a duration to of this specific value and, in particular, shorter or longer time periods may be set, as convenient.

The detection unit 10 receives signals indicating the optical power measured at the ports B and, in particular, receives a signal sig3 indicating the optical power measured on the port which is currently cut off from the downstream OLT signals (step S6). After time to has elapsed, the detection unit 10 is configured to compare the power level measured at the relevant port B against a threshold level θ (in step S7 of Fig.2).

An example of a suitable threshold power level is -28dBm. This value corresponds to the minimum sensitivity level that is required for an OLT by the ITU-T GPON standard (i.e. the lower limit on the power level of signals, received at the OLT's optical port, which the OLT must be capable of serving correctly). Adopting a θ value that is substantially the same as the minimum sensitivity level of the OLT seeks to ensure that the branching device 4 behaves similarly to an OLT from the point of view of the users (end ONTs). However, if desired θ may be set to a value different from the minimum sensitivity level of the OLT.

If the measured power at this port B is less than the threshold level θ then it may be inferred that the presently-cut-off port is not connected to the source of the interfering signal, accordingly the connection at this port is restored (step S8), i.e. the relevant second active coupler 42 allows the downstream 1460nm signal to pass to the relevant drop fiber 5 once again, under control of the detection unit 10. The detection unit 10 is configured to determine whether the optical coupler 42 that has just been controlled is the last of the optical couplers 42 to be tested (i.e. is j=jmax), in a step S9. If this is not the last optical coupler 42 then the optical coupler 42 for the next port B is selected (i.e. j is incremented to j+1 in step S10) and steps S4 to S7 are repeated for this next channel.

On the other hand, if in step S7 the measured power at the port B currently under test equals or exceeds the threshold level θ then it may be inferred that the presently-cut-off port is connected to the network branch containing the source of the interfering signal, because a network branch containing only well-behaved ONTs would no longer be propagating a signal in the upstream direction after the downstream signal has been cut off for the time interval t₀. Accordingly, in this case the detection unit 10 identifies the current port under test, in this case B_{X}, as the port connected to the network branch 5_{X} containing the source X of the disturbance on the network (S_{DIST}, in step S11 of Fig.2).

As mentioned above, various different types of action may be taken when the source of the interfering signal has been detected by the detection unit 10, including outputting an alarm signal or notification (not shown in the figures). It is advantageous for the detection unit 10 to implement a countermeasure against the detected attack automatically. For instance, the detection unit may be configured to output a signal sig4 to the active optical coupler 42 connected to the identified network branch containing the source of the interfering upstream signal, so that this active coupler decouples the 1310nm signals received at the connected port B from the OLT side of the branching device 4 (step S12 indicated in dashed lines in Fig.2).

Although the invention has been described above with reference to certain specific embodiments illustrated in Figs.1 and 2 it is to be understood that the invention is not limited by the details of those specific embodiments; various modifications and improvements can be made without departing from the scope of the invention as defined in the appended claims.

For example, in the flow diagram of Fig.2 the detection unit 10 prevents downstream OLT signals from reaching the different network branches by controlling the optical converters 42 one by one. If desired, the detection unit 10 can control the second active converters 42 to interrupt the downstream OLT signals at all of the ports B simultaneously or, indeed, the detection unit 10 can control the first active converter 41 to interrupt the downstream signals at port A of the branching device, or the downstream signals may be interrupted at the OLT, or at a point between the OLT and the port A.

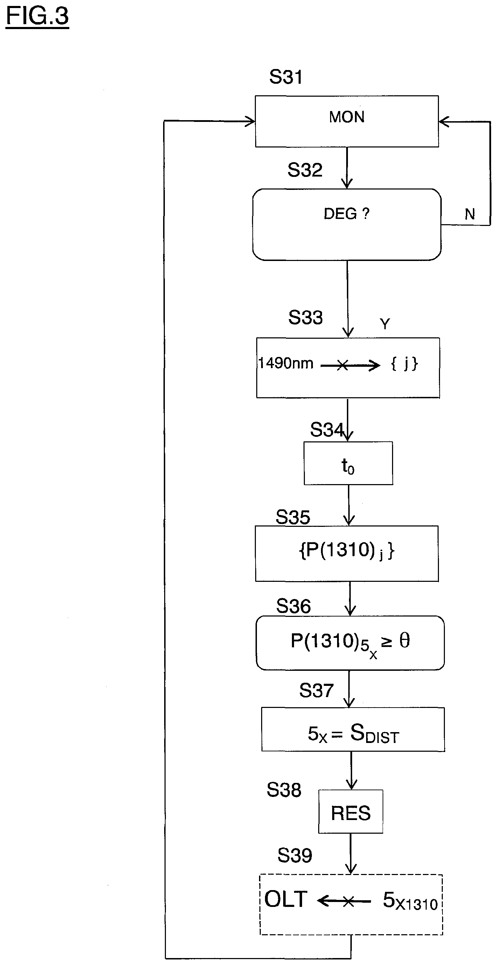

Fig.3 is a flow diagram illustrating an approach in which the detection unit 10 controls the second active converters 42 to interrupt the downstream OLT signals at all of the ports B simultaneously. Steps S31 and S32 of Fig.3 correspond to steps S1 and S2 of Fig.2. In the subsequent step S33, the downstream signals are cut off from the whole set of ports B simultaneously. In step S34, the timer times the time interval t₀ and then, in step S35, power measurements are taken for all of the ports B. In a step S36 the power measurements are checked to identify which power measurement equals or exceeds the threshold θ. In this case, step S36 determines that the network branch 5_{X} connected to the port B_{X} contains a source that is still transmitting upstream with power greater than the threshold level, even in the absence of downstream signals from the OLT 2 and so, in step S37, the network branch 5_{X} connected to port B_{X} is identified as the location of the source of the disturbance of the network (source of the alien signal injection). In step S38 the connections on the other ports are restored so that they start to receive downstream signals from the OLT once again. If desired, the upstream signals from the offending network branch 5_{X} are blocked using the active converter 42 connected to port B_{X} (step S39 in Fig.3).

Fig.4 illustrates certain additional steps that may be implemented in methods according to the present invention to enable, in appropriate cases, the reconnection of network branches that previously have been isolated from the network. The additional steps of Fig.4 will be described in the context of one example of implementation using the apparatus of Fix.1.

According to the example illustrated in Fig.4, after action has been taken (step S41) to prevent signals from a specific network branch, here 5_{X}, from being transmitted to the OLT, the upstream signals coming from this network branch 5_{X} continue to be monitored to see whether the power has fallen below a second threshold level θ₂ (step S42). (It will be understood that step S41 in Fig.4 corresponds to step S12 in Fig.2 and to step S39 in Fig.3). If the monitoring in step S42 shows that the power level remains too high (greater than θ₂) it is inferred that the offending network branch 5_{X} is still propagating an upstream signal that would degrade signal quality in the optical network, and the monitoring continues. On the other hand, if the monitored power level falls below θ₂, this is an indication that the network branch 5_{X} is no longer propagating a troublesome upstream signal. Thus, when step S42 results in a positive outcome the detection unit 10 controls the active coupler 42 serving the port B_{X} connected to the network branch 5_{X} to allow downstream signals from the OLT to reach this network branch 5_{X} (step S43) and to allow upstream signals from this network branch 5_{X} to be propagated towards the OLT (step S44).

Typically the threshold level θ₂, used to decide whether or not the isolated network branch should be re-connected is set the same as the threshold level θ used (e.g. in step S7 of Fig.2) to locate the network branch containing a misbehaving device, for example to -28 dBm. However, this is not essential; threshold level θ₂ may be set to a different value from θ, notably it may be set to a lower value so as to ensure that re-connection truly is justified.

If desired, the branching device 4 (more particularly, the detection unit 10) may be configured to send various notifications, to the OLT 2 or another desired device, for example a notification indicating that a specified network branch has been re-connected following performance of the additional steps represented in Fig.4.

## Claims

1. A method of identifying the location of a source of an interfering upstream signal in an optical communications network (1) comprising an optical line terminal (OLT) connected to a plurality of optical network terminals (ONTs) via a 1-to-N branching device (4) having a first port (A) connected to the OLT (2) and N second ports (B) connected to N respective network branches (5) extending towards the ONTs (9), the interfering signal propagating in the upstream direction towards the OLT (2), the method comprising the steps of:
stopping downstream OLT transmissions from being output from the second ports (B) of the branching device (4),
detecting a second port (B_{X}) of the branching device (4) still receiving an upstream signal from the connected network branch (5_{X}) despite the absence of downstream OLT transmissions on said network branch (5_{X}), and
identifying the network branch (5_{X}) connected to the second port (B_{X}) detected in the detecting step as the location of the source (X) of the interfering signal.

2. The source-localization method according to claim 1, wherein:
the 1-to-N branching device (4) comprises optical-electrical-optical converters (41,42) configured to convert signals received at the branching device (4) from optical form, to electrical form, and back to optical form, and
the stopping step comprises controlling optical-electrical-converters (42) at the ONT side of the branching device (4) to stop downstream OLT transmissions from being output from the second ports (B).

3. The source-localization method according to claim 1, and comprising a step of isolating from the OLT (2), at the ONT side of the 1-to-N branching device (4), the network branch (5_{X}) identified in the identifying step.

4. The source-localization method according to claim 3, and comprising the steps of:
monitoring signals received at the branching device (4) from a network branch (5_{X}) isolated in the isolating step,
determining when the network branch (5_{X}) monitored in the monitoring step has stopped transmitting signals in the upstream direction, and
re-connecting to the OLT (2) the network branch (5_{X}) determined in the determining step as having stopped upstream transmission.

5. The source-localization method according to claim 2, 3 or 4, wherein:
the 1-to-N branching device (4) comprises optical-electrical-optical converters (41,42) configured to convert signals received at the branching device (4) from optical form, to electrical form, and back to optical form, and
the isolating step comprises controlling an optical-electrical-converter (42) on the ONT side of the branching device (4) to prevent upstream transmissions from said network branch (5_{X}) identified in the identifying step from reaching the OLT side of the branching device (4).

6. The source-localization method according to any previous claim, and comprising the steps of:
detecting degradation in optical signal transmission from the ONTs (6) to the OLT (2), and
triggering performance of the stopping, detecting and identifying steps in response to detection of degradation in optical signal transmission in the degradation-detecting step.

7. Computer program comprising instructions for performing, when executed by a processor, the source-localization method according to any one of claims 1 to 6.

8. A 1-to-N optical branching device (4) comprising :
a first port (A) configured for connection to an optical line terminal (OLT),
N second ports (B) configured for outputting first optical signals received from the OLT (2) to N respective network branches (5) and for receiving from the network branches (5) optical signals directed to the OLT (2),
a first optical converter (41) configured to perform optical-electrical conversion at the first port (A),
N second optical converters (42) configured to perform optical-electrical conversion at the N second ports (B), respectively, and
a control unit (10) configured to control at least the second optical converters (42);
wherein the control unit (10) is configured:
to control the optical converters (41/42) to stop downstream OLT transmissions from being output from the second ports (B),
to monitor upstream transmissions received from the network branches (5), and
to identify, as the location of the source of the interfering signal, a connected network branch (5_{X}) still propagating an upstream transmission despite the absence of downstream OLT transmissions.

9. The optical branching device (4) according to claim 8, wherein the control unit (10) is configured to control the second optical converters to interrupt downstream OLT transmissions to the respective connected network branches (5) one by one.

10. The optical branching device (4) according to claim 8, wherein the control unit (10) is configured to control the second optical converter (42) connected to the network branch (5_{X}) identified as the source of the interfering signal, to prevent upstream signals transmitted by said network branch (5_{X}) from being transmitted to the OLT (2).

11. The optical branching device (4) according to claim 10, wherein the control unit (10) is configured to monitor signals, received at the second optical converter (42) connected to the network branch (5_{X}) identified as the location of the source of the interfering signal, to determine when the connected network branch (5_{X}) has stopped propagating signals in the upstream direction, and to control said second optical converter (42) to re-connect said network branch (5_{X}) to the OLT (2) when the network branch (5_{X}) has stopped transmitting signals in the upstream direction.

12. The optical branching device (4) according to any one of claims 8 to 11, wherein the control unit (10) is configured to detect degradation in optical signal transmission from the ONTs (6) to the OLT (2), and to trigger performance of said control, monitoring and identification in response to detection of degradation in optical signal transmission.

13. The optical branching device (4) according to any one of claims 8 to 11, wherein the control unit (10) is configured to perform said control, monitoring and identification in response to reception of a notification that degradation has been detected in optical signal transmission from the ONTs (6) to the OLT (2).

14. An optical line terminal (OLT) of an optical communications network, the OLT (2) comprising:
a connection to one end of an optical fiber (3), the other end of the optical fiber (3) being branched to plural optical network terminals (6) by a remote branching device (4),
a receiver unit configured to detect signal degradation in signals received at said connection, and
a transmitter unit configured, responsive to detection of signal degradation by the receiver unit, to transmit to the remote branching device (4), via said connection, a triggering command adapted to trigger performance of a method according to any one of claims 1 to 6 of identification of the source of an interfering signal.

## Patentansprüche

1. Verfahren zum Identifizieren des Ortes einer Quelle eines interferierenden Aufwärtssignals in einem optischen Kommunikationsnetzwerk (1), das ein optisches Leitungsendgerät (Optical Line Terminal, OLT) umfasst, das mit mehreren optischen Netzwerkendgeräten (Optical Network Terminals, ONTs) über eine 1-zu-N-Verzweigungseinrichtung (4) verbunden ist, die einen ersten Port (A), der mit dem OLT (2) verbunden ist, und N zweite Ports (B), die mit N sich zu den ONTs (9) hin erstreckenden jeweiligen Netzwerkzweigen (5) verbunden sind, aufweist, wobei sich das interferierende Signal in der Aufwärtsrichtung zu dem OLT (2) hin ausbreitet, wobei das Verfahren die Schritte umfasst:
Stoppen des Ausgebens von Abwärtsübertragungen des OLT an den zweiten Ports (B) der Verzweigungseinrichtung (4),
Erkennen eines zweiten Ports (Bₓ) der Verzweigungseinrichtung (4), der noch ein Aufwärtssignal von dem angeschlossenen Netzwerkzweig (5ₓ) empfängt, trotz des Nichtvorhandenseins von Abwärtsübertragungen des OLT auf diesem Netzwerkzweig (5ₓ), und
Identifizieren des Netzwerkzweigs (5ₓ), der an den im Schritt des Erkennens erkannten zweiten Port (Bₓ) angeschlossen ist, als den Ort der Quelle (X) des interferierenden Signals.

2. Verfahren zur Quellenlokalisierung nach Anspruch 1, wobei:
die 1-zu-N-Verzweigungseinrichtung (4) optisch-elektrisch-optische Wandler (41, 42) umfasst, die dafür ausgelegt sind, an der Verzweigungseinrichtung (4) empfangene Signale von einer optischen Form in eine elektrische Form und zurück in eine optische Form umzusetzen, und
der Schritt des Stoppens das Ansteuern optisch-elektrisch-optischer Wandler (42) auf der ONT-Seite der Verzweigungseinrichtung (4) umfasst, um das Ausgeben von Abwärtsübertragungen des OLT an den zweiten Ports (B) zu stoppen.

3. Verfahren zur Quellenlokalisierung nach Anspruch 1, welches außerdem einen Schritt des Isolierens des Netzwerkzweiges (5_{X}), der im Schritt des Identifizierens identifiziert wurde, von dem OLT (2) auf der ONT-Seite der 1-zu-N-Verzweigungseinrichtung (4) umfasst.

4. Verfahren zur Quellenlokalisierung nach Anspruch 3, welches außerdem die Schritte umfasst:
Überwachen von Signalen, die an der Verzweigungseinrichtung (4) von einem Netzwerkzweig (5ₓ) empfangen werden, der im Schritt des Isolierens isoliert wurde,
Bestimmen, wann der Netzwerkzweig (5ₓ), der im Schritt des Überwachens überwacht wird, aufgehört hat, Signale in der Aufwärtsrichtung zu übertragen, und
erneutes Verbinden des Netzwerkzweiges (5ₓ), der im Schritt des Bestimmens als die Aufwärtsübertragung gestoppt habend bestimmt wurde, mit dem OLT (2).

5. Verfahren zur Quellenlokalisierung nach Anspruch 2, 3 oder 4, wobei:
die 1-zu-N-Verzweigungseinrichtung (4) optisch-elektrisch-optische Wandler (41, 42) umfasst, die dafür ausgelegt sind, an der Verzweigungseinrichtung (4) empfangene Signale von einer optischen Form in eine elektrische Form und zurück in eine optische Form umzusetzen, und
der Schritt des Isolierens das Ansteuern eines optisch-elektrisch-optischen Wandlers (42) auf der ONT-Seite der Verzweigungseinrichtung (4) umfasst, um zu verhindern, dass Aufwärtsübertragungen von dem Netzwerkzweig (5ₓ), der im Schritt des Identifizierens identifiziert wurde, die OLT-Seite der Verzweigungseinrichtung (4) erreichen.

6. Verfahren zur Quellenlokalisierung nach einem der vorhergehenden Ansprüche, welches außerdem die Schritte umfasst:
Erkennen einer Verschlechterung der optischen Signalübertragung von den ONTs (6) zu dem OLT (2) und
Auslösen der Ausführung der Schritte des Stoppens, Erkennens und Identifizierens in Reaktion auf eine Erkennung einer Verschlechterung der optischen Signalübertragung im Schritt des Erkennens einer Verschlechterung.

7. Computerprogramm, welches Anweisungen zum Durchführen, wenn sie von einem Prozessor ausgeführt werden, des Verfahrens zur Quellenlokalisierung nach einem der Ansprüche 1 bis 6 umfasst.

8. Optische 1-zu-N-Verzweigungseinrichtung (4), welche umfasst:
einen ersten Port (A), der für eine Verbindung mit einem optischen Leitungsendgerät (Optical Line Terminal, OLT) ausgelegt ist,
N zweite Ports (B), die dafür ausgelegt sind, erste optische Signale, die von dem OLT (2) empfangen wurden, an N jeweilige Netzwerkzweige (5) auszugeben und von den Netzwerkzweigen (5) optische Signale zu empfangen, die für das OLT (2) bestimmt sind,
einen ersten optischen Wandler (41), der dafür ausgelegt ist, eine optisch-elektrische Umsetzung am ersten Port (A) durchzuführen,
N zweite optische Wandler (42), die dafür ausgelegt sind, jeweils eine optisch-elektrische Umsetzung an den N zweiten Ports (B) durchzuführen, und
eine Steuereinheit (10), die dafür ausgelegt ist, wenigstens die zweiten optischen Wandler (42) zu steuern;
wobei die Steuereinheit (10) dafür ausgelegt ist:
die optischen Wandler (41/42) anzusteuern, um das Ausgeben von Abwärtsübertragungen des OLT an den zweiten Ports (B) zu stoppen,
Aufwärtsübertragungen zu überwachen, die von den Netzwerkzweigen (5) empfangen werden, und
als den Ort der Quelle des interferierenden Signals einen angeschlossenen Netzwerkzweig (5ₓ) zu identifizieren, auf dem trotz des Nichtvorhandenseins von Abwärtsübertragungen des OLT noch eine Aufwärtsübertragung stattfindet.

9. Optische Verzweigungseinrichtung (4) nach Anspruch 8, wobei die Steuereinheit (10) dafür ausgelegt ist, die zweiten optischen Wandler anzusteuern, um Abwärtsübertragungen des OLT zu den jeweiligen angeschlossenen Netzwerkzweigen (5) eine nach der anderen zu unterbrechen.

10. Optische Verzweigungseinrichtung (4) nach Anspruch 8, wobei die Steuereinheit (10) dafür ausgelegt ist, den zweiten optischen Wandler (42) anzusteuern, der mit dem als die Quelle des interferierenden Signals identifizierten Netzwerkzweig (5ₓ) verbunden ist, um zu verhindern, dass Aufwärtssignale, die von dem Netzwerkzweig (5ₓ) übertragen werden, zu dem OLT (2) übertragen werden.

11. Optische Verzweigungseinrichtung (4) nach Anspruch 10, wobei die Steuereinheit (10) dafür ausgelegt ist, Signale zu überwachen, die an dem zweiten optischen Wandler (42) empfangen werden, der mit dem als der Ort der Quelle des interferierenden Signals identifizierten Netzwerkzweig (5ₓ) verbunden ist, um zu bestimmen, wann der angeschlossene Netzwerkzweig (5ₓ) aufgehört hat, Signale in der Aufwärtsrichtung zu übertragen, und den zweiten optischen Wandler (42) anzusteuern, um den Netzwerkzweig (5ₓ) wieder mit dem OLT (2) zu verbinden, wenn der Netzwerkzweig (5ₓ) aufgehört hat, Signale in der Aufwärtsrichtung zu übertragen.

12. Optische Verzweigungseinrichtung (4) nach einem der Ansprüche 8 bis 11, wobei die Steuereinheit (10) dafür ausgelegt ist, eine Verschlechterung der optischen Signalübertragung von den ONTs (6) zu dem OLT (2) zu erkennen und in Reaktion auf eine Erkennung einer Verschlechterung der optischen Signalübertragung die Durchführung der Steuerung, Überwachung und Identifizierung auszulösen.

13. Optische Verzweigungseinrichtung (4) nach einem der Ansprüche 8 bis 11, wobei die Steuereinheit (10) dafür ausgelegt ist, die Steuerung, Überwachung und Identifizierung in Reaktion auf den Empfang einer Benachrichtigung durchzuführen, dass eine Verschlechterung der optischen Signalübertragung von den ONTs (6) zu dem OLT (2) erkannt worden ist.

14. Optisches Leitungsendgerät (Optical Line Terminal, OLT) eines optischen Kommunikationsnetzwerks, wobei das OLT (2) umfasst:
eine Verbindung zu einem Ende eines Lichtwellenleiters (3), wobei das andere Ende des Lichtwellenleiters (3) durch eine entfernte Verzweigungseinrichtung (4) zu mehreren optischen Netzwerkendgeräten (6) verzweigt ist,
eine Empfängereinheit, die dafür ausgelegt ist, eine Signalverschlechterung bei Signalen zu erkennen, die an der Verbindung empfangen werden, und
eine Sendereinheit, die dafür ausgelegt ist, in Reaktion auf eine Erkennung einer Signalverschlechterung durch die Empfängereinheit, zu der entfernten Verzweigungseinrichtung (4) über die Verbindung einen Auslösebefehl zu übertragen, der geeignet ist, die Durchführung eines Verfahrens nach einem der Ansprüche 1 bis 6 zur Identifizierung der Quelle eines interferierenden Signals auszulösen.

## Revendications

1. Procédé d'identification de l'emplacement d'une source d'un signal montant brouilleur dans un réseau de communications optiques (1) comprenant un terminal de ligne optique (OLT) connecté à une pluralité de terminaux de réseau optique (ONT) par l'intermédiaire d'un dispositif de branchement 1 vers N (4) ayant un premier port (A) connecté à l'OLT (2) et N deuxièmes ports (B) connectés aux N branches de réseau respectives (5) s'étendant vers les ONT (9), le signal brouilleur se propageant dans la direction montante vers l'OLT (2), le procédé comprenant les étapes suivantes :
empêcher que des transmissions OLT descendantes soient délivrées en sortie depuis les deuxièmes ports (B) du dispositif de branchement (4),
détecter un deuxième port (Bₓ) du dispositif de branchement (4) recevant encore un signal montant de la branche de réseau connectée (5ₓ) en dépit de l'absence de transmissions OLT descendantes sur ladite branche de réseau (5ₓ), et
identifier la branche de réseau (5ₓ), connectée au deuxième port (Bₓ) détecté dans l'étape de détection, comme emplacement de la source (X) du signal brouilleur.

2. Procédé de localisation de source selon la revendication 1, dans lequel :
le dispositif de branchement 1 vers N (4) comprend des convertisseurs optiques-électroniques-optiques (41, 42) configurés pour convertir les signaux reçus au niveau du dispositif de branchement (4) d'une forme optique en une forme électrique, puis à nouveau en une forme optique, et
l'étape d'arrêt comprend de contrôler des convertisseurs optiques-électriques (42) du côté ONT du dispositif de branchement (4) pour stopper la délivrance en sortie des transmissions OLT descendantes depuis les deuxièmes ports (B).

3. Procédé de localisation de source selon la revendication 1, et comprenant une étape d'isolation par rapport à l'OLT (2), du côté ONT du dispositif de branchement 1 vers N (4), de la branche de réseau (5ₓ) identifiée dans l'étape d'identification.

4. Procédé de localisation de source selon la revendication 3, et comprenant les étapes suivantes :
surveiller des signaux reçus au niveau du dispositif de branchement (4) depuis une branche de réseau (5ₓ) isolée dans l'étape d'isolation,
déterminer quand la branche de réseau (5ₓ) surveillée dans l'étape de surveillance a cessé de transmettre des signaux montants, et
reconnecter à l'OLT (2) la branche de réseau (5ₓ) déterminée dans l'étape de détermination comme ayant arrêté la transmission montante.

5. Procédé de localisation de source selon les revendications 2, 3 ou 4, dans lequel :
le dispositif de branchement 1 vers N (4) comprend des convertisseurs optiques-électriques-optiques (41, 42) configurés pour convertir des signaux reçus au niveau du dispositif de branchement (4) d'une forme optique en une forme électrique, puis à nouveau en une forme optique, et
l'étape d'isolation comprend de contrôler un convertisseur optique-électrique (42) du côté ONT du dispositif de branchement (4) pour empêcher les transmissions montantes provenant dudit branchement de réseau (5ₓ) identifié dans l'étape d'identification d'atteindre le côté OLT du dispositif de branchement (4).

6. Procédé de localisation de source selon l'une quelconque des revendications précédentes, et comprenant les étapes suivantes :
détecter la dégradation de la transmission du signal optique des ONT (6) vers l'OLT (2), et
déclencher l'exécution des étapes d'arrêt, de détection et d'identification en réponse à la détection de la dégradation dans la transmission du signal optique dans l'étape de détection de la dégradation.

7. Programme d'ordinateur comprenant des instructions pour exécuter, lorsqu'elles sont exécutées par un processeur, le procédé de localisation de source selon l'une quelconque des revendications 1 à 6.

8. Dispositif de branchement optique 1 à N (4) comprenant :
un premier port (A) configuré pour une connexion à un terminal de ligne optique (OLT),
N deuxièmes ports (B) configurés pour délivrer en sortie des premiers signaux optiques reçus de l'OLT (2) vers N branches de réseau respectives (5) et pour recevoir des branches de réseau (5) des signaux optiques dirigés vers l'OLT (2),
un premier convertisseur optique (41) configuré pour effectuer une conversion optique-électrique au niveau du premier port (A),
N deuxièmes convertisseurs optiques (42) configurés pour effectuer une conversion optique-électrique au niveau des N deuxièmes ports (B), respectivement, et
une unité de contrôle (10) configurée pour contrôler au moins les deuxièmes convertisseurs optiques (42) ;
dans lequel l'unité de contrôle (10) est configurée pour:
contrôler les convertisseurs optiques (41/42) pour stopper la délivrance en sortie des transmissions OLT descendantes depuis les deuxièmes ports (B),
surveiller les transmissions montantes reçues des branches de réseau (5), et
identifier, comme emplacement de la source du signal brouilleur, une branche de réseau connectée (5ₓ) propageant encore une transmission montante en dépit de l'absence de transmissions OLT descendantes.

9. Dispositif de branchement optique (4) selon la revendication 8, dans lequel l'unité de contrôle (10) est configurée pour contrôler les deuxièmes convertisseurs optiques pour interrompre les transmissions OLT descendantes vers les branches de réseau connectées respectives (5) une par une.

10. Dispositif de branchement optique (4) selon la revendication 8, dans lequel l'unité de contrôle (10) est configurée pour contrôler le deuxième convertisseur optique (42) connecté à la branche de réseau (5ₓ) identifiée comme étant la source du signal brouilleur, pour empêcher que les signaux montants transmis par ladite branche de réseau (5ₓ) soient transmis à l'OLT (2).

11. Dispositif de branchement optique (4) selon la revendication 10, dans lequel l'unité de contrôle (10) est configurée pour surveiller des signaux reçus au niveau du deuxième convertisseur optique (42) connecté à la branche de réseau (5ₓ) identifiée comme étant l'emplacement de la source du signal brouilleur, pour déterminer quand la branche de réseau connectée (5ₓ) a cessé de propager des signaux dans la direction montante, et pour contrôler ledit deuxième convertisseur optique (42) pour reconnecter ladite branche de réseau (5ₓ) à l'OLT (2) lorsque la branche de réseau (5ₓ) a arrêté de transmettre des signaux dans la direction montante.

12. Dispositif de branchement optique (4) selon l'une quelconque des revendications 8 à 11, dans lequel l'unité de contrôle (10) est configurée pour détecter la dégradation dans la transmission du signal optique des ONT (6) vers l'OLT (2), et pour déclencher l'exécution dudit contrôle, de la surveillance et de l'identification en réponse à la détection de la dégradation dans la transmission du signal optique.

13. Dispositif de branchement optique (4) selon l'une quelconque des revendications 8 à 11, dans lequel l'unité de contrôle (10) est configurée pour exécuter ledit contrôle, ladite surveillance et ladite identification en réponse à la réception d'une notification indiquant qu'une dégradation a été détectée dans la transmission du signal optique des ONT (6) vers l'OLT (2).

14. Terminal de ligne optique (OLT) d'un réseau de communications optiques, l'OLT (2) comprenant :
une connexion à une extrémité d'une fibre optique (3), l'autre extrémité de la fibre optique (3) étant raccordée à plusieurs terminaux de réseau optique (6) par un dispositif de branchement à distance (4),
une unité réceptrice configurée pour détecter la dégradation du signal dans des signaux reçus au niveau de ladite connexion, et
une unité émettrice configurée, en réponse à la détection de la dégradation du signal par l'unité réceptrice, pour transmettre au dispositif de branchement à distance (4), par l'intermédiaire de ladite connexion, une commande de déclenchement adaptée pour déclencher l'exécution d'un procédé selon l'une quelconque des revendications 1 à 6 d'identification de la source d'un signal brouilleur.
